Europäisches Patentamt

European Patent Office

Office européen des brevets

(19)

(11) Publication number: **0 233 783**
**B1**

(12) # EUROPEAN PATENT SPECIFICATION

(45) Date of publication of the patent specification:
**12.09.90**

(51) Int. Cl.⁵: **G11B 20/10**

(21) Application number: **87301392.4**

(22) Date of filing: **18.02.87**

(54) **Apparatus for recording and/or reproducing data.**

(30) Priority: **19.02.86 JP 34336/86**

(43) Date of publication of application:
**26.08.87 Bulletin 87/35**

(45) Publication of the grant of the patent:
**12.09.90 Bulletin 90/37**

(84) Designated Contracting States:
**DE FR GB NL**

(56) References cited:
**DE-A- 3 544 819**
**DE-A- 3 604 374**

(73) Proprietor: **SONY CORPORATION,
7-35 Kitashinagawa 6-Chome Shinagawa-ku,
Tokyo 141(JP)**

(72) Inventor: **Sako, Yoichiro c/o Patents Division Sony
Corp., 6-7-35 Kitashinagawa, Shinagawa-ku
Tokyo 141(JP)**
Inventor: **Yamagami, Tamotsu c/o Patents Division Sony
Corp., 6-7-35 Kitashinagawa, Shinagawa-ku
Tokyo 141(JP)**
Inventor: **Yamamura, Shinichi c/o Patents Division Sony
Corp., 6-7-35 Kitashinagawa, Shinagawa-ku
Tokyo 141(JP)**

(74) Representative: **Pilch, Adam John Michael et al, c/o D.
Young & Co. 10 Staple Inn, London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to apparatus for recording and/or reproducing data, and more particularly but not exclusively to apparatus of this kind which records and reproduces data using a recording medium having a large capacity, such as a magneto-optical disc.

Hard disc units are known which can write data on a large capacity hard disc for information storage.

Such units are genrally used as data storage for a computer. The information is recorded in a concentric or spiral track formed on the disc and the disc is rotated at a predetermined rotational speed.

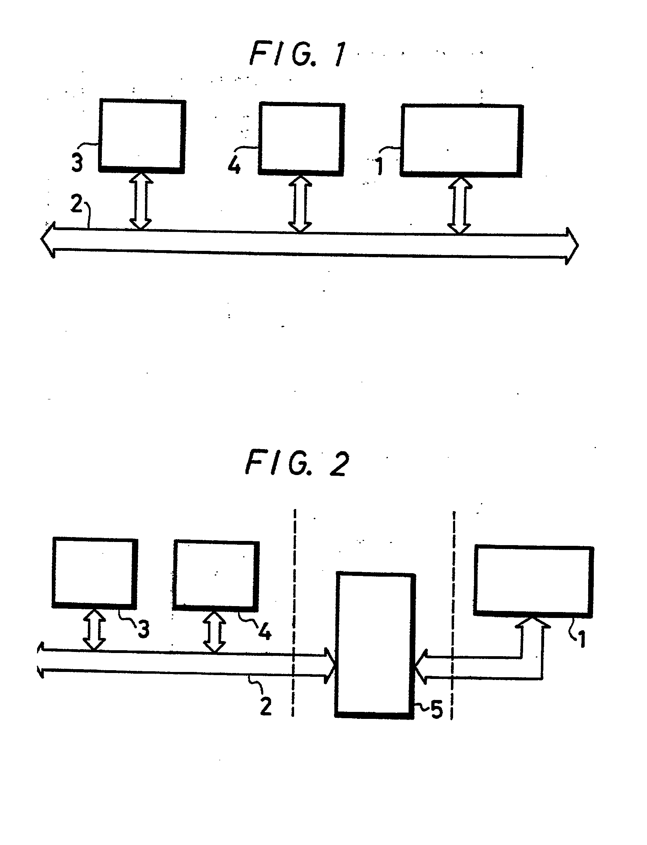

Figure 1 of the accompanying drawings is a block diagram schematically showing a previously-proposed recording and reproducing apparatus. Writing data in and reproducing the same data from a hard disc unit 1 is effected by a central processing unit (CPU) 3 via a data bus 2. The disc arranged in the hard disc unit is rotated at a constant rotational speed, irrespective of (in other words, not synchronised with) the transmission rate of data being input to the disc. Instead, the rotational speed is timed by the CPU 3 for recording data on the disc. The data processed by the hard disc unit may accordingly be non-sequential data.

Data communication between the hard disc unit 1 and the CPU 3 is effected via a random access memory (RAM) 4 which serves as a buffer memory. It is further possible to communicate the data between the RAM 4 and the hard disc unit 1 at a high speed by the use of a direct memory access (DMA) controller, without interruption by the CPU 3, wherein data is processed non-sequentially.

Data representing a still image or the like can be processed as a one frame portion of intermittent or burst data by using a frame memory for the RAM 4.

Figure 2 of the accompanying drawings is a block diagram showing a circuit for processing such burst data. A disc controller 5 is arranged between the CPU 3 and the disc unit 1. A required portion of burst data stored in the RAM 4 is recorded in the disc unit 1 through the disc controller 5 under the control of the CPU 3. This construction may be used, for example, in an electronic mail system.

The "new media era" provides a variety of information in many kinds of media, that is, multi-media information. Such information includes non-sequential or intermittent data, such as computer data, which does not have any correlation with adjacent data; data which has a correlation with adjacent data, but is non-sequential in its entirety, such as data representing a still image; and data which has a correlation with adjacent data and is sequential, such as digital audio data. These different types of data have different characteristics to each other.

It would be useful to be able to write different types of data information on a disc and to provide users with the disc. The so-called magneto-optical disc is a rewritable large capacity storage medium which can store multi-media information. The magneto-optical disc is different from a hard disc which is arranged to record and reproduce data under strictly controlled conditions, because the magneto-optical disc produces errors at a higher ratio than the hard disc unit. Thus data stored on the magneto-optical disc is generally provided with redundant bits for error correction codes and other functions for detecting and correcting errors.

However, while such error correction is effective with respect to random errors, it is not so effective with respect to burst errors. It may be better to treat data including errors as defective rather than correcting the errors, where computer data is concerned. On the other hand, it is sufficient to correct errors in data forms like pulse code modulated (PCM) audio data to such a degree that the errors are not audible. Errors which cannot be corrected can be interpolated by the use of adjacent data having a correlation therewith, so that the errors will not be noticeable.

Even so, if data is recorded in the same order as the original data and a burst error occurs in a portion of that data, then that data portion cannot be interpolated.

According to one aspect of the invention there is provided apparatus for recording input data on a recording medium, the apparatus comprising: a memory for storing input data to be recorded in units of a predetermined quantity;
a first address control means for determining an address for said memory;
a second address control means for determining an address for said memory;
a selector for selectively supplying said memory with the address generated by either said first address control means or said second address control means depending on whether or not the input data has a correlation with adjacent data;
an encoding means for adding at least an error correcting code to each predetermined quantity unit of input data; and an identification signal recording means for recording on said recording medium an identification signal which indicates whether or not the input data has a correlation with adjacent data;
wherein, in use, when the input data has no correlation with adjacent input data, the input data is sequentially written in said memory by said first address control means, read out therefrom, encoded by said encoding means, and recorded on the recording medium without changing the order of the input data, and, when the input data has a correlation with adjacent input data, the input data is written in scrambled form in said memory by said second address control means, read out therefrom scrambled, and then the scrambled data is encoded by said encoding means and recorded on the recording medium.

According to another aspect of the invention there is provided apparatus for reproducing data from a recording medium, the data being of a type in which, when the data has no correlation with adjacent data, it is encoded and recorded in the input order thereof on the recording medium while, when the data has a correlation with adjacent data, it is scrambled, encoded and recorded on the recording medium, said apparatus comprising:

a memory for storing reproduced data in units of a predetermined quantity;

a first address control means for determining an address for said memory;

a second address control means for determining an address for said memory;

a selector for selectively supplying said memory with the address from either said first address control means or said second address control means depending on whether or not the data has a correlation with adjacent data;

a decoding means for correcting possible errors in the data for each predetermined quantity unit; and

a detecting means operable to detect an identification signal which indicates whether or not the recorded data has a correlation with adjacent data, and to generate an output signal which is used to control said selector;

wherein, in use, when the data has no correlation with adjacent data, the reproduced data is sequentially written in said memory at addresses generated by said first address control means, read out therefrom, and output without changing the order of the reproduced data, and, when the data has a correlation with adjacent data, the reproduced data is written in said memory in descrambled form by said second address control means, read out therefrom descrambled, and output.

A preferred embodiment of the present invention, to be described in greater detail hereinafter, provides apparatus which appropriately records and reproduces data having different characteristics.

The invention will now be described by way of example with reference to the accompanying drawings, in which:

Figure 1 is a block diagram schematically showing a previously-proposed data recording and reproducing system;

Figure 2 is a block diagram schematically showing another previously-proposed data recording and reproducing system;

Figure 3 is a block diagram schematically showing an overall arrangement of a recording and reproducing apparatus according to an embodiment of the present invention;

Figures 4A and 4B are diagrams showing an example of a sector format of a magneto-optical disc;

Figure 5 is a diagram showing a formation of a data portion arranged in one sector shown in Figures 4A and 4B; and

Figure 6 is a diagram showing an arrangement of the data portion similar to that of Figure 5, but when the data is scrambled.

An embodiment of apparatus for recording and reproducing data will be described hereinafter, wherein a magneto-optical disc is used as an example of a recording medium.

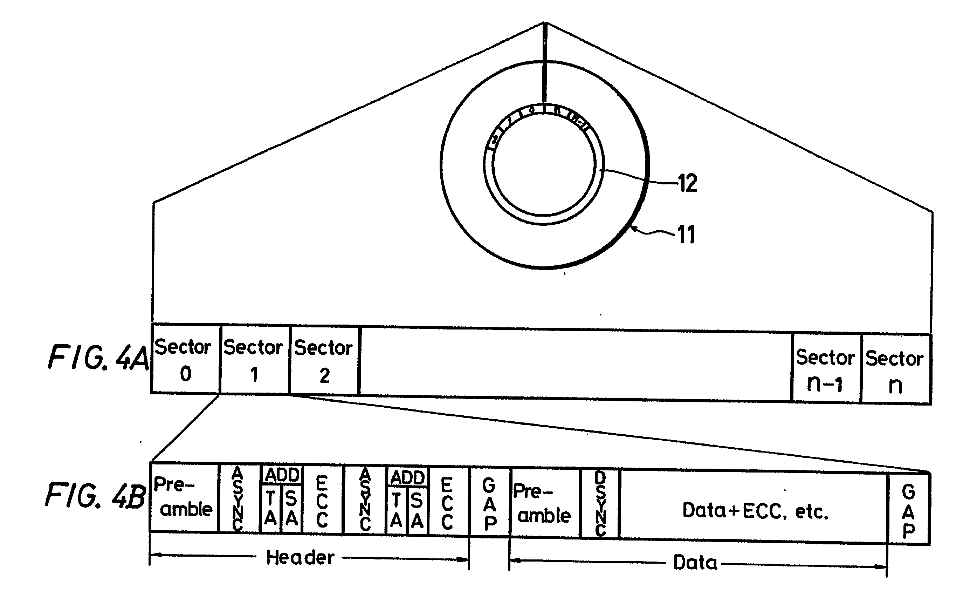

Referring to Figure 4A, a magneto-optical disc 11 is provided with concentric or spiral tracks 12 formed such that one track is traced for each rotation of the disc 11. Data may be recorded on and reproduced from each track 12.

Each of the tracks 12 on the disc 11 is formed of a plurality (n + 1) of sectors 0, 1, 2, ..... n - 1, n equally divided in the direction of the circumference of the disc 11. In each sector, there is recorded a predetermined amount of data and redundant bits, such as an error correcting code and an error detecting code, which are added to the predetermined amount of data.

As shown in Figure 4A, one track is formed of n + 1 sectors, and in this example, n is set at 31, that is, one track is formed of 32 sectors.

A format for data recorded in one sector is arranged, for example, as shown in Figure 4B. To be specific, one sector comprises a header portion, a data portion, and gap portions GAP which are provided after each of the header and data portions.

In the header portion, a preamble signal is recorded at the head thereof and following thereto there is twice recorded a grouping of an address synchronising signal ASYNC for synchronising the address data, an address signal ADD which comprises track address data TA and sector address data SA, and an error correcting code ECC for correcting possible errors in the address signal.

In the data portion, a preamble signal is recorded at the head, followed by a data synchronising signal DSYNC, and data to be recorded on the magneto-optical disc with an error correcting code ECC for correcting possible errors in the data.

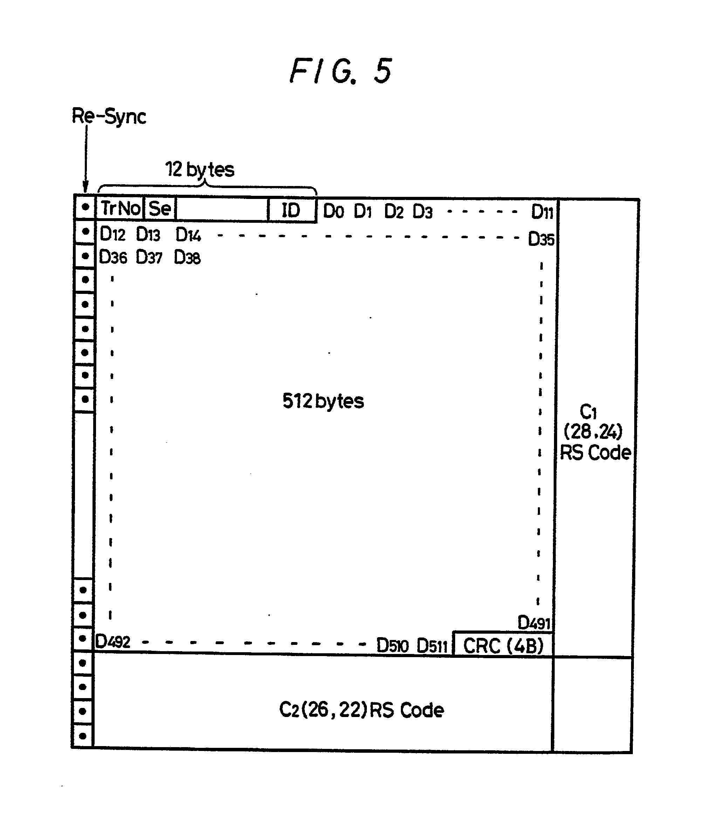

The unit quantity of data to be recorded in the data portion of each sector is generally 512 bytes, when the disc is used as a storage medium for a computer. Figure 5 shows a formation of the data portion for this case.

Referring to Figure 5, the quantity of data recorded in each sector is 512 bytes, $D_0$ to $D_{511}$ as shown. Preceding the 512 bytes of data there are additionally recorded 12 bytes of supplementary data comprising a track number TrNo, a sector number SeNo, a user area and data identification information ID. Then, a 4-byte CRC (cyclic redundancy check) code for detecting errors is produced and added at the end of the preceding 524 bytes of data. The 528 bytes of data thus formed is arranged in a matrix having 24-byte rows and 22-byte columns, as shown in Figure 5.

Then, a first error correcting code $C_1$ having 4 bytes (for example a (28,24) Reed-Solomon code) is added to each row of the 528 bytes of data including the 4-byte CRC code. In the same manner, a second error correcting code $C_2$ having 4 bytes (for example a (26,22) Reed-Solomon code) is added to each column of the 528 bytes of data.

Referring again to Figure 5, at the head of each row of data there is recorded a synchronising signal Re-Sync indicative of the head of each row, by which the data is sequentially recorded and read along the row direction.

An embodiment of the invention will now be described, which records a variety of information on a disc defined by the above-described sector format, as well as a reproducing apparatus associated therewith.

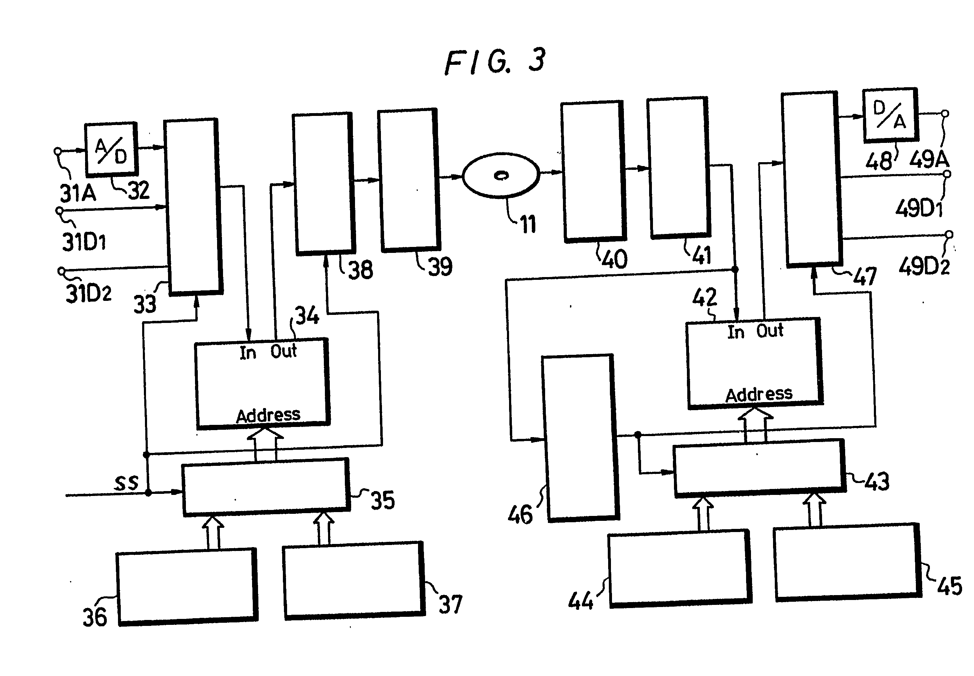

Referring now to the block diagram of Figure 3, a magneto-optical recording disc 11 includes a track, for example a spiral-shaped track, on which the above data is recorded. A recording and reproducing head (not shown) in the apparatus such that the head correctly scans the previously-recorded track.

A first digital data input terminal $31D_1$ is provided to receive digital data such as data from a computer, in which adjacent data words or groups have no correlation with each other. A second digital data input terminal $31D_2$ is provided to receive time-sampled analog data, for example, analog audio data sampled at various predetermined sampling frequencies with each value being sampled as one word formed of a predetermined number of bits, digital data at various transmission rates of data, and the like. Such digital data has a correlation between adjacent words or groups of data and can be interpolated with the adjacent data. An input terminal 31A is provided to receive analog signals, for example, audio analog signals.

Digital data input to the terminals $31D_1$ and $31D_2$ is supplied to a selector 33 while analog signals input to the terminal 31A are first supplied to an analog-to-digital (A/D) converter 32 to be converted into corresponding digital signals. The sampling frequency of the A/D converter 32 can be changed between various values, for example 32 kHz, 44.1 kHz, 48 kHz, and the like. Further, it is possible that the sample can be selected from various numbers of bits, for example 8 bits, 12 bits, 16 bits and the like. In the case of such digitally converted analog signals, particularly in the case of digitally converted audio signals, the resulting signal has a correlation among data words so that an erroneous word can be interpolated by words located in the vicinity of the erroneous word. This is because the changes in amplitude of an analog signal are not as likely to be abrupt as in the case of a digitally generated signal. The digital signal from the A/D converter 32 is supplied to the selector 33.

The selector 33 is arranged to select, by either manual operation or a control signal SS supplied thereto from an external circuit (not shown), one of the signals from the input terminals $31D_1,31D_2$ or the output of the A/D converter 32. The digital signal selected by the selector 33 is stored in a random access memory (RAM) 34. In this case, the write and read addresses in the RAM 34 can be changed in accordance with the input data selected by the selector 33.

A sequential address control means 36 is arranged to generate a sequential address for the write and read addresses, and a scrambled address control means 37 generates write and read addresses which follow a predetermined order for the cases where one of the two read and write addresses is sequential, and the other of the two addresses is scrambled. One of the addresses generated by the two address control means 36 and 37 is selected by a selector 35 to be supplied to address terminals of the RAM 34. The selector is controlled by the selection signal SS in parallel relation with the selector 33.

When the digital data from the input terminal $31D_1$ is to be selected by the selector 33, the address generated by the sequential address control means 36 which is selected by the selector 35 is supplied to the RAM 34 in which each of the 512 bytes of data is sequentially written at an address corresponding to each byte, namely $D_0$, $D_1$, $D_2$, ..... $D_{511}$, as shown in Figure 5.

The RAM 34 generally comprises two RAM devices, such as two RAM chips. Data is written into a vacant one of the devices and read out from the other into which data has been fully written. During the read-out procedure, data is sequentially read from the RAM 34 in the same order as the writing by the sequential address, and is supplied to an ECC encoder 38 wherein the additional information and redundant data $C_1$ and $C_2$ are added thereto (as shown in Figure 5) thereby to form the data portion for each sector as a product code. The data portion thus formed is supplied to a recording process circuit 39 wherein the header portion is added thereto (as shown in Figure 4), the signal is suitably modulated, and is recorded on the magneto-optical disc 11 as one sector.

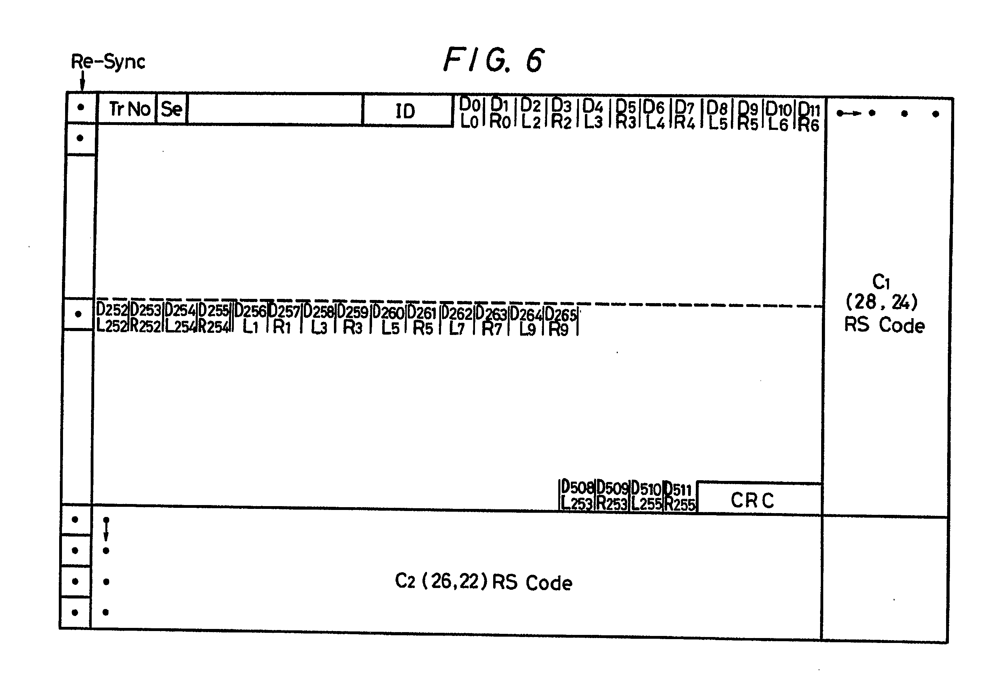

When the data from the A/D converter 32 or the data from the input terminal $31D_2$ is to be selected by the selector 33, the selector 35 supplies the RAM 34 with the address generated by the scrambled address control means 37. If it is assumed that the data concerned is 8-bit 2-channel stereo audio data, first samples $L_0,R_0$ of the left and right channels are respectively written at the first and second byte positions $D_0,D_1$ of the 512 bytes of data shown in Figure 5, and the next samples $L_1,R_1$ respectively written at the 257th and 258th byte positions $D_{256},D_{257}$, that is, the first and second byte positions of the latter half of the 512 bytes of data. Then, following in the same manner, samples of even number channels are written in the former half of the 512 bytes of data, and samples of odd number channels in the latter half of the 512 bytes of data, that is the data is written in a scrambled manner. This arrangement of data is shown in Figure 6.

The data thus scrambled is sequentially read out along the row direction (namely $D_0$, $D_1$, $D_2$ ..... (etc.)) following the read address signals generated by the control means 37. In other words, data is read out in a scrambled state and supplied to the ECC encoder 38 wherein the additional information and redundant data $C_1$ and $C_2$ (as shown in Figure 6) are added thereto. The data portion thus formed is supplied to the recording process circuit 39 wherein the header portion is added thereto (as shown in Figure 4), suitably modulated, and recorded as one sector on the magneto-optical disc 11.

The selection signal SS is also supplied to the ECC encoder 38 causing an identification signal, which indicates whether the data to be recorded is scrambled or not, to be recorded in the ID portion of the supplementary information portion. This identification signal may be recorded in the header portion. Further, the identification signal may be recorded in a track directory allocated at the innermost or the outermost track of the disc 11 in which information is recorded relative to data to be recorded on the disc.

The RAM 34 is shown separately from the encoder 38 (which in practice may include a RAM) for a better understanding of the operation of the apparatus; however, in a practical device, these RAMs may be implemented by a single RAM system which can serve for both purposes. Specifically, in that case, the redundant data $C_1$ and $C_2$ will be produced for the data in the one RAM by the ECC encoder 38 and written in the RAM, and then the written data with the redundant data will be read out from the RAM and supplied to the recording process circuit 39.

In one example, if the rotational speed of the disc 11 is determined as 1406½ rpm, the data transmission rate is 3.072 Mbps (1.536 Mbps x 2). If data having a sampling frequency of 8 kHz and a word length of 8 bits is recorded on the disc, it is possible to record 48 channels on the disc. In the case of an audio signal having a sampling frequency of 32 kHz and a word length of 8 bits, it is possible to record 12 channels. It is alternatively possible to record 4 channels of an audio signal having a sampling frequency of 48 kHz and a word length of 16 bits.

If the rotational speed of the disc is changed, data having a different transmission rate can be recorded in each sector as a 512-byte data block.

The data recorded as described above is reproduced in the following manner.

The data reproduced from the disc 11 by the head (not shown) is demodulated by a reproducing process circuit 40, supplied to an ECC decoder 41 wherein possible errors are corrected, and the 512-byte data portion is stored in a RAM 42.

In the reproducing system, it is required to switch the address of the RAM 42, depending on whether or not the recorded data is scrambled. A sequential address control means 44 corresponds to the sequential address control means 36 in the recording system, and a descrambled address control means 45 corresponds to the scrambled address control means 37 in the recording system.

One of the output addresses from the two address control means 44 and 45 is selected by a selector 43 according to the recorded data and supplied to the RAM 42.

The output from the ECC decoder 41 is supplied to an identification signal decoding circuit 46 wherein a determination is made from the identification signal stored in the ID portion of the supplementary information portion whether or not the data is scrambled. If the recorded data is not scrambled, the selector 43 selects the address from the sequential address control means 44 which is then supplied to the RAM 42, whereby the data is written in and read out from the RAM 42 in the order of the address. The read-out data is supplied to a selector 47.

If the recorded data is scrambled, the selector 43 selects the address from the descrambled address control means 45 which is then supplied to the RAM 42, wherein he scrambled data from the ECC decoder 41 is descrambled so as to be sequentially stored in the RAM 42 in the original order. Since the data is now rearranged in the original order, the data may be sequentially read from the RAM 42 in accordance with the sequential address. The read-out data is then supplied to the selector 47.

The selector 47 outputs data, under the control of a selection signal generated from the identification signal decoding circuit 46 and in accordance with the recorded data, to one of two digital data output terminals $49D_1, 49D_2$ or to a digital-to-analog (D/A) converter 49 whose output signal is delivered to an output terminal 49A. The signals output from the terminals $49D_1$ and $49D_2$ correspond to the types of data originally input to the terminals $31D_1$ and $31D_2$, respectively.

As described above, when data is scrambled and then recorded, even if a burst error occurs during a reproducing procedure and cannot be corrected by the ECC decoder, assuming that all of the data in the former half of one sector is erroneous, the odd-numbered sampled data still remain, so that the even-numbered sampled data therebetween can easily be interpolated by, for example, an average value interpolation.

If the identification signal is recorded in the header portion or in the directory, reproduction of the data can be be performed in the same way as described above.

Further, since the identificaiton signal is recorded in a predetermined portion separate from the data, the identification signal decoding circuit 46 may instead be supplied with the signal input to the input side of the ECC decoder 41.

Also, in the reproducing system, the RAM 42 and a RAM arranged in the ECC decoder 41 may generally be replaced by a single RAM system. Specifically, in this case, the data and redundant data written in the one RAM are first read out to correct possible errors in the ECC decoder 41, and the corrected data is written in the RAM. Then, the corrected data written in the RAM is read out.

Further, the RAM 34 in the recording system and the RAM 42 in the reproducing system may be provided by a common device.

Although in the above embodiment a magneto-optical disc is given as an example of a recording medium, the present invention is applicable to other recording media.

As described above, data is recorded on the disc in accordance with the characteristics of the data to be recorded, so that data having a correlation with adjacent data can be easily interpolated.

However, for recording data which has no correlation with adjacent data, it is possible to facilitate the address control in the memory and thereby simplify the software therefor.

**Claims**

1. Apparatus for recording input data on a recording medium (11), the apparatus comprising:
a memory (34) for storing input data to be recorded in units of a predetermined quantity;
a first address control means (36) for determining an address for said memory (34);
a second address control means (37) for determining an address for said memory (34);
a selector (35) for selectively supplying said memory (34) with the address generated by either said first address control means (36) or said second address control means (37) depending on whether or not the input data has a correlaiton with adjacent da-

ta;
an encoding means (38) for adding at least an error correcting code (ECC) to each predetermined quantity unit of input data; and an identification signal recording means (39) for recording on said recording medium (11) an identification signal (ID) which indicates whether or not the input data has a correlation with adjacent data;

wherein, in use, when the input data has no correlation with adjacent input data, the input data is sequentially written in said memory (34) by said first address control means (36), read out therefrom, encoded by said encoding means (38), and recorded on the recording medium (11) without changing the order of the input data, and, when the input data has a correlation with adjacent input data, the input data is written in scrambled form in said memory (34) by said second address control means (37), read out therefrom scrambled, and then the scrambled data is encoded by said encoding means (38) and recorded on the recording medium (11).

2. Apparatus according to claim 1, in which said first address control means (36) is operable to generate sequential addresses when the data is written in or read out from said memory (34), and said second address control means (37) is operable to generate non-sequential addresses when the data is written in or read out from said memory (34).

3. Apparatus according to claim 1 or claim 2, in which the data which has no correlation with adjacent data is data for a computer.

4. Apparatus according to claim 1, claim 2 or claim 3, in which the data which has a correlation with adjacent data is data converted from an analog signal into a pulse code modulated signal.

5. Apparatus according to any one of the preceding claims, in which said encoding means (39) comprises a product code producing means.

6. Apparatus for reproducing data from a recording medium (11), the data being of a type in which, when the data has no correlation with adjacent data, it is encoded and recorded in the input order thereof on the recording medium (11) while, when the data has a correlation with adjacent data, it is scrambled, encoded and recorded on the recording medium (11), said apparatus comprising:
a memory (42) for storing reproduced data in units of a predetermined quantity;
a first address control means (44) for determining an address for said memory (42);
a second address control means (45) for determining an address for said memory (42);
a selector (43) for selectively supplying said memory (42) with the address from either said first address control means (44) or said second address control means (45) depending on whether or not the data has a correlation with adjacent data;
a decoding means (41) for correcting possible errors in the data for each predetermined quantity unit; and
a detecting means (46) operable to detect an identification signal (ID) which indicates whether or not the recorded data has a correlation with adjacent data, and to generate an output signal which is used to control said selector (43);

wherein, in use, when the data has no correlation with adjacent data, the reproduced data is sequentially written in said memory (42) at addresses generated by said first address control means (44), read out therefrom, and output without changing the order of the reproduced data, and, when the data has a correlation with adjacent data, the reproduced data is written in said memory (42) in descrambled form by said second address control means (45), read out therefrom descrambled, and output.

7. Apparatus according to claim 6, in which said first address control means (44) is operable to generate sequential addresses when the data is written into or read out from said memory (42) and said second address control means (45) is operable to generate non-sequential addresses when the data is written into or read out from said memory (42).

**Patentansprüche**

1. Gerät zur Aufzeichnung von Eingangsdaten auf einem Aufzeichnungsmedium (11)
mit einem Speicher (34) zum Speichern der aufzuzeichnenden Eingangsdaten in Einheiten mit vorbestimmter Größe,
mit einer ersten Adressensteuereinrichtung (36) zur Bestimmung einer Adresse für den Speicher (34),
mit einer zweiten Adressensteuereinrichtung (37) zur Bestimmung einer Adresse für den Speicher (34),
mit einem Wähler (35) zur selektiven Ansteuerung des Speichers (34) entweder mit der von der ersten (36) oder mit der von der zweiten Adressensteuereinrichtung (37) erzeugten Adresse in Abhängigkeit davon, ob die Eingangsdaten mit benachbarten Daten korreliert sind oder nicht,
mit einer Kodiereinrichtung (38) zum Hinzufügen wenigstens eines Fehlerkorrekturkodes (ECC) zu jeder der genannten Größen-Einheiten von Eingangsdaten,
sowie mit einer Identifiziersignal-Aufzeichnungseinrichtung (38) zum Aufzeichnen eines Identifiziersignals (ID) auf das Aufzeichnungsmedium (11), das anzeigt, ob die Eingangsdaten mit benachbarten Daten korreliert sind oder nicht, wobei die Eingangsdaten im Betrieb
– dann, wenn sie mit benachbarten Eingangsdaten nicht korreliert sind, mit Hilfe der ersten Adressensteuereinrichtung (36) in den Speicher (34) eingeschrieben, aus ihm ausgelesen, von der Kodiereinrichtung (38) kodiert werden und ohne Änderung ihrer Reihenfolge auf dem Aufzeichnungsmedium (11) aufgezeichnet werden,
– und dann, wenn sie mit benachbarten Eingangsdaten korreliert sind, mit Hilfe der zweiten Adressensteuereinrichtung (37) in verwürfelter Form in den Speicher (34) eingeschrieben, aus ihm in verwürfelter Form ausgelesen werden und die verwürfelten Daten dann von der Kodiereinrichtung (38) kodiert und auf dem Aufzeichnungsmedium (11) aufgezeichnet werden.

2. Gerät nach Anspruch 1, bei dem die erste Adressensteuereinrichtung (36) in der Weise betrieben werden kann, daß sie sequentielle Adressen erzeugt, wenn die Daten in den Speicher (34) eingeschrieben bzw. aus ihm ausgelesen werden, und bei dem die zweite Adressensteuereinrichtung (37) so betrieben werden kann, daß sie nichtsequentielle Adressen erzeugt, wenn die Daten in den Speicher (34) eingeschrieben bzw. aus ihm ausgelesen werden.

3. Gerät nach Anspruch 1 oder 2, bei dem die Daten, die mit benachbarten nicht korreliert sind, Daten für einen Computer sind.

4. Gerät nach Anspruch 1, 2 oder 3, bei dem die Daten, die mit benachbarten Daten korreliert sind, solche Daten sind, die aus einem Analogsignal in ein pulskodemoduliertes Signal umgewandelt sind.

5. Gerät nach einem der vorhergehenden Ansprüche, bei dem die Kodiereinrichtung (38) eine Einrichtung zur Erzeugung eines Produktkodes ist.

6. Gerät zur Wiedergabe von Daten von einem Aufzeichnungsmedium (11), wobei es sich bei den Daten um solche handelt, die dann, wenn keine Korrelation mit benachbarten Daten besteht, kodiert und in der Reihenfolge ihres Eingangs auf dem Aufzeichnungsmedium (11) aufgezeichnet sind, während sie dann, wenn Korrelation mit benachbarten Daten besteht, in verwürfelter und kodierter Form auf dem Aufzeichnungsmedium (11) aufgezeichnet sind, mit einem Speicher (42) zur Speicherung von wiedergegebenen Daten in Einheiten mit vorbestimmter Größe, mit einer ersten Adressensteuereinrichtung (44) zur Bestimmung einer Adresse für diesen Speicher (34), mit einer zweiten Adressensteuereinrichtung (45) zur Bestimmung einer Adresse für den Speicher (34), mit einem Wähler (43) zur selektiven Ansteuerung des Speichers (42) mit der Adresse entweder aus der ersten (44) oder der zweiten Adressensteuereinrichtung (45) in Abhängigkeit davon, ob die Eingangsdaten mit benachbarten Daten korreliert sind oder nicht, mit einer Dekodiereinrichtung (41) zum Korrigieren möglicher Fehler in den Daten für jede Größen-Einheit, sowie mit einer Detektoreinrichtung (46) zur Erfassung eines Identifiziersignals (ID), das anzeigt, ob die aufgezeichneten Daten mit benachbarten Daten korreliert sind oder nicht, und zur Erzeugung eines Ausgangssignals für die Steuerung des Wählers (43), wobei die wiedergegebenen Daten im Betrieb

– dann, wenn sie mit benachbarten Eingangsdaten nicht korreliert sind, sequentiell unter von der ersten Adressensteuereinrichtung (44) erzeugten Adressen in den Speicher (42) eingeschrieben, aus diesem ausgelesen und ohne Änderung ihrer Reihenfolge ausgegeben werden, und

– und dann, wenn sie mit benachbarten Eingangsdaten korreliert sind, in entwürfelter Form mit Hilfe der zweiten Adressensteuereinrichtung (45) in den Speicher (42) eingeschrieben, aus diesem in entwürfelter Form ausgelesen und ausgegeben werden.

7. Gerät nach Anspruch 6, bei dem die erste Adressensteuereinrichtung (44) sequentielle Adressen erzeugt, wenn die Daten in den Speicher (42) eingelesen oder aus ihm ausgelesen werden und die zweite Adressensteuereinrichtung (45) nichtsequentielle Adressen erzeugt, wenn die Daten in den Speicher (42) eingeschrieben oder aus ihm ausgelesen werden.

## Revendications

1. Appareil pour l'enregistrement de données d'entrée sur un support d'enregistrement (11), l'appareil comprenant:
une mémoire (34) pour mémoriser des données d'entrée à enregistrer en unités d'une quantité prédéterminée;
un premier moyen de contrôle d'adresse (36) pour déterminer une adresse pour la mémoire (34);
un deuxième moyen de contrôle d'adresse (37) pour déterminer une adresse pour la mémoire (34);
un sélecteur (35) pour fournir sélectivement à la mémoire (34) l'adresse générée soit par le premier moyen de contrôle d'adresse (36), soit par le deuxième moyen de contrôle d'adresse (37) selon que les données d'entrée ont ou non une corrélation avec des données voisines;
un moyen de codage (38) pour ajouter au moins un code de correction d'erreurs (ECC) à chaque unité de quantité prédéterminée des données d'entrée; et
un moyen d'enregistrement de signal d'identification (38) pour enregistrer sur le support d'enregistrement (11) un signal d'identification (ID) qui indique si les données d'entrée ont ou non une corrélation avec des données voisines;
dans lequel, en fonctionnement, quand les données d'entrée n'ont pas de corrélation avec des données d'entrée voisines, les données d'entrée sont écrites séquentiellement dans la mémoire (34) par le premier moyen de contrôle d'adresse (36), lues dans celle-ci, codées par le moyen de codage (38), et enregistrées sur le support d'enregistrement (11) sans changer l'ordre des données d'entrée, et, quand les données d'entrée ont une corrélation avec des données d'entrée voisines, les données d'entrée sont écrites sous forme brouillées dans la mémoire (34) par le deuxième moyen de contrôle d'adresse (37), lues dans celle-ci brouillées, et les données brouillées sont ensuite codées par le moyen de codage (38) et enregistrées sur le support d'enregistrement (11).

2. Appareil selon la revendication 1, dans lequel le premier moyen de contrôle d'adresse (36) peut être mis en fonctionnement pour générer des adresses séquentielles quand les données sont écrites ou lues dans la mémoire (34), et le deuxième moyen de contrôle d'adresse (37) peut être mis en fonctionnement pour générer des adresses non séquentielles quand les données sont écrites ou lues dans la mémoire (34).

3. Appareil selon l'une quelconque des revendications 1 et 2, dans lequel les données qui n'ont pas de corrélation avec des données voisines sont des données pour un ordinateur.

4. Appareil selon l'une quelconque des revendications 1 à 3, dans lequel les données qui ont une corrélation avec des données voisines sont des données converties d'un signal analogique en signal modulé par impulsions codées.

5. Appareil selon l'une quelconque des revendications 1 à 4, dans lequel le moyen de codage (38) comprend un moyen de production de code de produit.

6. Appareil pour reproduire des données d'un support d'enregistrement (11), les données étant d'un type dans lequel, quand les données n'ont pas de corrélation avec des données voisines, elles sont codées et enregistrées dans leur ordre d'entrée sur le support d'enregistrement (11), alors que, lorsque les données ont une corrélation avec des données voisines, elles sont brouillées, codées et enregistrées sur le support d'enregistrement (11), l'appareil comprenant:
une mémoire (42) pour mémoriser des données reproduites en unités d'une quantité prédéterminée;
un premier moyen de contrôle d'adresse (44) pour déterminer une adresse pour la mémoire (42);
un deuxième moyen de contrôle d'adresse (45) pour déterminer une adresse pour la mémoire (42);
un sélecteur (43) pour fournir sélectivement à la mémoire (42) l'adresse soit du premier moyen de contrôle d'adresse (44), soit du deuxième moyen de contrôle d'adresse (45) selon que les données ont ou non une corrélation avec des données voisines;
un moyen de décodage (41) pour corriger des erreurs possibles dans les données pour chaque unité de quantité prédéterminée; et
un moyen de détection (46) pouvant être mis en fonctionnement pour détecter un signal d'identification (ID) qui indique si les données enregistrées ont ou non une corrélation avec des données voisines, et pour engendrer un signal de sortie qui est utilisé pour commander le sélecteur (43);
dans lequel, en fonctionnement, quand les données n'ont pas de corrélation avec des données voisines, les données reproduites sont écrites séquentiellement dans la mémoire (42) à des adresses générées par le premier moyen de contrôle d'adresse (44), lues dans celle-ci, et sorties sans changer l'ordre des données reproduites, et, quand les données ont une corrélation avec des données voisines, les données reproduites sont écrites dans la mémoire (42) sous forme débrouillées par le deuxième moyen de contrôle d'adresse (45), lues débrouillées dans celle-ci, et sorties.

7. Appareil selon la revendication 6, dans lequel le premier moyen de contrôle d'adresse (44) peut être mis en fonctionnement pour générer des adresses séquentielles quand les données sont écrites ou lues dans la mémoire (42) et le deuxième moyen de contrôle d'adresse (45) peut être mis en fonctionnement pour générer des adresses non séquentielles quand les données sont écrites ou lues dans la mémoire (42).

## FIG. 1

## FIG. 2

**FIG. 3**

EP 0 233 783 B1

*FIG. 4A*

| Sector 0 | Sector 1 | Sector 2 | | Sector n-1 | Sector n |
|---|---|---|---|---|---|

*FIG. 4B*

| Pre-amble | A S Y N C | ADD TA SA | E C C | A S Y N C | ADD TA SA | E C C | G A P | Pre-amble | D S Y N C | Data+ECC, etc. | G A P |
|---|---|---|---|---|---|---|---|---|---|---|---|

Header — Data

# FIG. 5

Re-Sync

12 bytes

| TrNo | Se | | ID | D0 D1 D2 D3 − − − − − − D11 |

D12 D13 D14 − − − − − − − − − − − − − − − − D35

D36 D37 D38

512 bytes

C1
(28,24)
RS Code

D491

D492 − − − − − − − − − − − − D510 D511 | CRC (4B)

C2(26,22)RS Code

*FIG. 6*

EP 0 233 783 B1